# FASCICULE DE BREVET EUROPEEN

(11) **EP 3 408 967 B1**
(45) Date de publication et mention de la délivrance du brevet: **25.12.2019**
(21) Numéro de dépôt: 17700840.6
(22) Date de dépôt: 20.01.2017
(51) Int. Cl.: H04L 12/24, H04W 56/00, H04W 84/20, H04L 5/00, H04L 12/703, H04W 84/18

(54) **RÉSEAU DE CAPTEURS RECONFIGURABLE**
REKONFIGURIERBARES SENSORNETZWERK
RECONFIGURABLE NETWORK OF SENSORS

(30) Priorité: 29.01.2016 FR 1650725
(43) Date de publication de la demande: 05.12.2018
(73) Titulaire: MAPLE HIGH TECH, 31100 Toulouse (FR)
(72) Inventeur: TANCEREL, Ludovic, 31100 Toulouse (FR); DALCE, Réjane, 81100 Castres (FR)
(74) Mandataire: Brevalex
(86) Numéro de dépôt international: PCT/EP2017/051139
(87) Numéro de publication internationale: WO 2017/129478

(56) Documents cités:
- US-A1- 2010 080 118
- AMEER AHMED ABBASI ET AL: "A Distributed Connectivity Restoration Algorithm in Wireless Sensor and Actor Networks", LOCAL COMPUTER NETWORKS, 2007. LCN 2007. 32ND IEEE CONFERENCE ON, IEEE, PI, 1 octobre 2007 (2007-10-01), pages 496-503, XP031153089, ISBN: 978-0-7695-3000-0
- A-J GARCIA-SANCHEZ ET AL: "Optimized Orphan Algorithm for IEEE 802.15.4 networks", WIRELESS COMMUNICATION SYSTEMS, 2009. ISWCS 2009. 6TH INTERNATIONAL SYMPOSIUM ON, IEEE, PISCATAWAY, NJ, USA, 7 septembre 2009 (2009-09-07), pages 428-432, XP031545222, ISBN: 978-1-4244-3584-5
- ZEN K ET AL: "Performance evaluation of IEEE 802.15.4 for mobile sensor networks", WIRELESS AND OPTICAL COMMUNICATIONS NETWORKS, 2008. WOCN '08. 5TH IFIP INTERNATIONAL CONFERENCE ON, IEEE, PISCATAWAY, NJ, USA, 5 mai 2008 (2008-05-05), pages 1-5, XP031272556, ISBN: 978-1-4244-1979-1

## Description

### DOMAINE TECHNIQUE

L'objet de la présente invention concerne le domaine des réseaux de capteurs reconfigurables. La présente invention trouve notamment à s'appliquer à la gestion de communications d'étiquettes (*tags*) dans un tel réseau.

### ÉTAT DE LA TECHNIQUE ANTÉRIEURE

Les réseaux de capteurs sans fils ou WSNs (*Wireless Sensor Networks)* ont fait récemment l'objet de nombreuses recherches.

On rappelle qu'un réseau WSN est un réseau *ad hoc* comportant un grand nombre de nœuds qui sont en général des capteurs capables de récolter et de transmettre des mesures de manière autonome. La position des nœuds dans un tel réseau n'est pas nécessairement déterminée. Lorsqu'un nœud du réseau connaît sa position ou peut la déterminer, il est dénommé « nœud-ancre » (*anchor node*) ou simplement ancre (*anchor*).

Un des problèmes les plus fréquemment rencontrés dans un réseau de capteurs sans fil est la défaillance d'un nœud, matérielle ou logicielle. La survenance de la défaillance d'un nœud engendre un trou de couverture du réseau.

Différentes solutions ont été proposées dans l'état de la technique pour remédier à l'apparition d'un trou de couverture. Une première stratégie, dite de maintenance statique, consiste à remplacer un premier sous-ensemble de nœuds réalisant la couverture par un second sous-ensemble de nœuds du réseau, précédemment en mode veille, réalisant la même couverture et donc redondant avec le premier. Une seconde stratégie, dite de maintenance dynamique, consiste à reconfigurer le réseau de manière dynamique, par exemple en complétant de manière adaptative les nœuds du premier sous-ensemble dont le niveau de batterie est encore suffisant avec des nœuds du second sous-ensemble, pour permettre de couvrir un certain nombre de cibles. Cette dernière technique a été décrite dans l'article de D. Tchuani-Tchakonte et al. intitulé « Adaptive healing procedure for lifetime improvement in Wireless Sensor Networks » publié dans Proc. of On-Line Testing Symposium (OLTS), pp. 59-64, 2015.

La stratégie de reconfiguration de réseau décrite dans cet article n'est toutefois applicable que lorsque les nœuds du réseau sont fixes. L'émergence de réseaux WSN mobiles, (c'est-à-dire dont les nœuds sont mobiles) et de réseaux hybrides (c'est-à-dire dont certains nœuds sont fixes et d'autres mobiles) a suscité de nouvelles stratégies pour remédier au problème de trous de couverture. Ces stratégies ont généralement pour point commun d'identifier et de localiser le nœud défaillant, de sélectionner les nœuds de remplacement et de déplacer les nœuds de remplacement de manière à combler le trou de couverture. Un exemple d'une telle stratégie de reconfiguration a été décrit dans l'article de G. Wang et al. intitulé « Sensor relocation in mobile sensor networks » publié dans Proc. of Annual Joint Conference of the IEEE Computer and Communications Societies (INFOCOM), 2015.

Les stratégies de reconfiguration de réseaux WSN mobiles (voire hybrides) supposent que les différents nœuds aient la capacité de connaître ou de calculer leur position (c'est-à-dire soient des ancres au sens défini ci-dessus) et que certains d'entre eux aient de surcroît la capacité de se déplacer et de s'orienter de manière autonome. A cette fin, les ancres peuvent être équipées d'un récepteur GPS ou d'un système de triangulation par rapport à des ancres fixes. Une telle solution est complexe et coûteuse, voire tout simplement irréalisable dans certains types d'environnement. En outre, lorsque la nouvelle position d'une ancre est erronée, les mesures effectuées par ou grâce à cette ancre seront également erronées. Les erreurs peuvent ainsi se propager de proche en proche jusqu'à atteindre une partie importante du réseau WSN.

L'article de A.A. Abbasi et al. intitulé « A distributed connectivity restoration algorithm in wireless sensor and actor networks" publié dans Proc. of 32nd IEEE Conference on Local Computer Networks, 1er Octobre 2017, pp. 496-503 décrit une méthode de reconfiguration de réseau WSN permettant une reconnection d'un réseau partitionné en substituant au nœud défaillant par un nœud de remplacement sur la base d'un critère de degré de proximité du nœud candidat au remplacement.

L'article de A-J Garcia Sanchez et al. intitulé « Optimized orphan algorithm for IEEE 802.15.4 networks » publié dans Proc. of 6th IEEE International Symposium on Wireless Communication Systems, 7 Septembre 2009, pp. 428-432, propose un mécanisme d'association (OOA) permettant à un nœud orphelin de se reconnecter rapidement au réseau. Toutefois, cet article est silencieux sur la manière dont la nouvelle ancre coordinatrice est choisie.

L'article de K. Zen et al. intitulé « Performance évaluation of IEEE 802.15.4 for mobile sensor networks » publié dans Proc. of 5th IEEE IFIP Conference on Wireless and Optical Communications, 5 Mai 2008, pp. 1-5, décrit les problèmes d'association et de synchronisation d'un nœud mobile dans un réseau WSN et évalue les performances de ce réseau dans un tel cas.

Le problème à la base de l'invention est par conséquent de proposer une méthode de reconfiguration d'un réseau WSN qui ne présente pas les inconvénients précités, en particulier qui ne nécessite pas de redondance dans le réseau ni ne requiert de déplacer physiquement les ancres du réseau pour combler un trou de couverture.

### EXPOSÉ DE L'INVENTION

La présente invention est définie par une méthode de reconfiguration d'un réseau de capteurs sans fil organisé selon une architecture arborescente, ledit réseau comprenant des nœuds d'un premier type, dits ancres coordinatrices, capables de recevoir et d'émettre un signal de balise et des nœuds d'un second type, dits ancres subordonnées, capables de recevoir un signal de balise pour se synchroniser avec le réseau, les nœuds étant par ailleurs reliés par un canal auxiliaire à un serveur central, dans laquelle, lorsqu'un nœud perd sa synchronisation avec le réseau, il en avertit le serveur central et celui-ci en déduit, à partir de la topologie du réseau, l'ancre coordinatrice à l'origine de la perte de synchronisation et le sous-arbre du réseau atteint par la perte de synchronisation, le serveur central selectionne un couple de nœuds constitué par un premier nœud appartenant audit sous-arbre et un second nœud appartenant au reste du réseau (*S\ST*), et si le second nœud est une ancre subordonnée, lui transmet un ordre de transformation pour le transformer en ancre coordinatrice, le premier nœud se synchronisant avec le réseau au moyen du signal de balise émis par le second nœud ainsi transformé.

Lorsque le second nœud reçoit l'ordre de transformation du serveur central, il lui envoie un message d'acquittement et transmet son propre signal de balise.

Lorsque le premier nœud reçoit le signal de balise du second nœud, celui-ci envoie un message au serveur central indiquant qu'il est synchronisé.

Si le premier nœud est une ancre subordonnée et que le sous-arbre ne se réduit pas à ce premier nœud, le serveur central lui transmet un ordre de transformation pour le transformer en ancre coordinatrice, au moins un troisième nœud appartenant audit sous-arbre se synchronisant alors au moyen du signal de balise émis par le premier nœud ainsi transformé.

Lorsque le premier nœud reçoit un ordre de transformation du serveur central, celui-ci commence à émettre son propre signal de balise et lui envoie un message d'acquittement.

Avantageusement, le serveur central sélectionne le couple de nœuds sur la base d'un critère de distance minimale séparant ces nœuds et/ou d'un critère de qualité de liaison entre ces nœuds.

L'invention concerne également une méthode de reconfiguration d'un réseau de capteurs sans fil organisé selon une architecture arborescente, ledit réseau comprenant des nœuds d'un premier type, dits ancres coordinatrices, capables de recevoir et d'émettre un signal de balise et des nœuds d'un second type, dits ancres subordonnées, capables de recevoir un signal de balise pour se synchroniser avec le réseau, les nœuds étant par ailleurs reliés par un canal auxiliaire à un serveur central, au moins une étiquette électronique étant mobile au sein du réseau, ladite étiquette étant capable de se synchroniser avec le réseau à partir d'un signal de balise émis par une ancre coordinatrice, dans laquelle, lorsque ladite étiquette n'a pas reçu de signal de balise pendant un premier intervalle de temps prédéterminé, celle-ci diffuse des notifications d'état orphelin tant qu'elle ne reçoit pas à nouveau un signal de balise, et que les ancres subordonnées du réseau recevant les notifications d'état orphelin transmettent chacune au serveur central un compte rendu comprenant un identifiant de l'étiquette, l'adresse MAC de l'ancre subordonnée ayant reçu la notification d'état orphelin et un indicateur de la qualité de la liaison entre ladite étiquette et l'ancre subordonnée, le serveur central sélectionnant une ancre subordonnée parmi celles ayant reçu les notifications d'état orphelin sur la base au moins de ladite qualité de liaison, le serveur central transmettant un ordre de transformation à l'ancre subordonnée ainsi sélectionnée pour la transformer en ancre coordinatrice, ladite étiquette se synchronisant avec le réseau au moyen du signal de balise émis par l'ancre coordinatrice ainsi obtenue.

Le compte rendu envoyé par une ancre subordonnée peut comprendre en outre le nombre de notifications d'état orphelin reçues de l'étiquette pendant un second intervalle de temps prédéterminé.

Le serveur central effectue avantageusement la sélection de l'ancre subordonnée sur la base d'un critère de qualité de liaison entre l'ancre subordonnée et l'étiquette, et, le cas échéant, d'un nombre de notifications d'état orphelin reçues de l'étiquette par l'ancre subordonnée pendant le second intervalle de temps prédéterminé.

Lorsque l'ancre subordonnée sélectionnée reçoit un ordre de transformation du serveur central, celle-ci se met à émettre son propre signal de balise et envoie un message d'acquittement au serveur central par le canal auxiliaire.

Lorsque ladite étiquette reçoit le signal de balise de l'ancre coordinatrice ainsi obtenue, elle transmet à cette dernière une requête d'association au moyen d'un message unicast.

Selon un exemple de réalisation, le réseau de capteurs est conforme à la norme IEEE 802.15.4.

Le canal auxiliaire peut être une liaison filaire ou une liaison Wi-Fi.

### BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :
La Fig. 1 représente schématiquement un réseau WSN susceptible d'être reconfiguré par la méthode de reconfiguration selon l'invention ;
La Fig. 2 représente schématiquement un exemple d'orgnaisation temporelle des émissions de balises dans le réseau;
Les Figs. 3A et 3B illustrent des premier et second exemples de perte de synchronisation dans le réseau de la Fig. 1 ;
La Fig. 4 représente un exemple d'échange de messages dans le réseau en cas de perte de synchronisation d'une étiquette;
La Fig. 5 représente schématiquement un ordinogramme de la méthode de reconfiguration d'un réseau WSN selon un premier mode de réalisation de l'invention ;
La Fig. 6 représente schématiquement un ordinogramme de la méthode de reconfiguration d'un réseau WSN selon un second mode de réalisation de l'invention.

### EXPOSÉ DÉTAILLÉ DE MODES DE RÉALISATION PARTICULIERS

Nous considérerons dans la suite un réseau WSN, et plus particulièrement un réseau obéissant au protocole de communication IEEE 802.15.4, tel qu'un réseau ZigBee™ ou 6LoWPAN™. Nous supposerons que la couche d'accès au réseau (MAC layer) fonctionne en mode balise (*beacon mode*), autrement dit que le réseau comporte un certain nombre de nœuds coordinateurs transmettant à intervalles réguliers une balise, c'est-à-dire un signal permettant aux nœuds environnants de se synchroniser. La couche physique du réseau est de préférence un système de communication UWB (Ultra Wide Band).

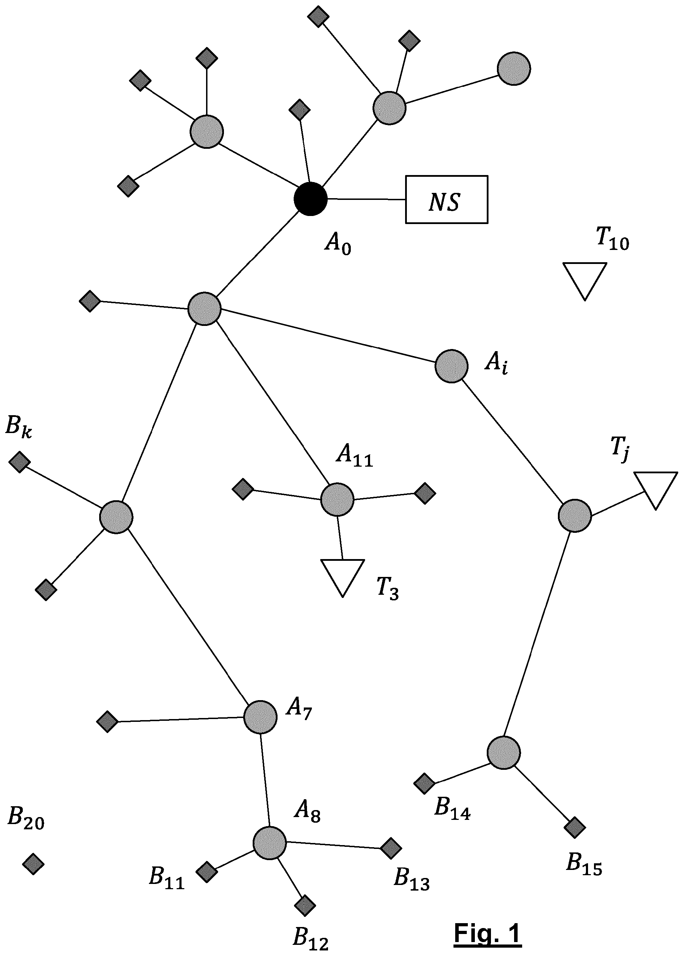

La Fig. 1 représente un exemple de réseau WSN susceptible d'être reconfiguré par la méthode de reconfiguration selon la présente invention.

Le réseau est organisé selon une topologie arborescente (dite aussi *cluster-tree*) autour d'un nœud-coordinateur maître noté *A*₀, encore dénommé dans la suite ancre coordinatrice primaire. L'ensemble des nœuds du réseau est noté *S*.

Nous supposerons que le réseau en question comprend deux types d'ancres. Les ancres du premier type ou ancres coordinatrices, notées ci-après *Aᵢ*, *i* = 0,.., *N* -1 peuvent émettre des balises alors que les ancres du second type ou ancres subordonnées, notées ci-après *Bₖ, k* =1,..,*M,* sont destinées à recevoir des balises des ancres coordinatrices avoisinantes sans pouvoir en émettre elles-mêmes. En fonctionnement normal, une ancre subordonnée est reliée à une ancre coordinatrice par une liaison radio, par exemple une liaison UWB.

En outre, les ancres coordinatrices et les ancres subordonnées sont reliées à un serveur central *NS* par un autre canal, dit canal auxiliaire, dont la probabilité de coupure est plus faible que celle de la liaison radio. Selon une première variante de réalisation, le canal auxiliaire est une liaison filaire, par exemple une liaison Ethernet. Selon une seconde variante de réalisation, lorsque la liaision radio est une liaison UWB, le canal auxiliaire est une liaison Wi-Fi. En cas de perte de liaison radio avec son ancre coordinatrice, une ancre subordonnée peut se trouver isolée du reste du réseau WSN (cas de l'ancre *B*₂₀) mais elle reste cependant reliée au serveur *NS* par son canal auxiliaire.

Sans perte de généralité, nous supposerons dans la suite que le canal auxiliaire utilise une liaison filaire. Pour des raisons de lisibilité, les liaisons filaires entre les ancres et le serveur central n'ont pas été représentées sur la figure.

Le serveur *NS* peut être colocalisé avec l'ancre coordinatrice primaire. Les liaisons radio servent notamment à synchroniser les nœuds entre eux alors que les liaisons filaires avec le serveur permettent de configurer les nœuds.

Des étiquettes (tags), par exemple des transpondeurs RFID, notés *Tⱼ, j* = 1 ,..,*P* sont également présents dans la zone où est déployé le réseau et reliés à l'infrastructure par des liaisons radio. Ces étiquettes reçoivent les balises émises par les ancres coordinatrices pour se synchroniser avec le réseau. En revanche, lorsqu'une étiquette ne reçoit aucune balise (cas de l'étiquette *T*₁₀ par exemple), elle émet des notifications d'état orphelin (*orphan notification*) qui sont alors reçues par les ancres subordonnées et les ancres coordinatrices qui se trouvent à sa portée.

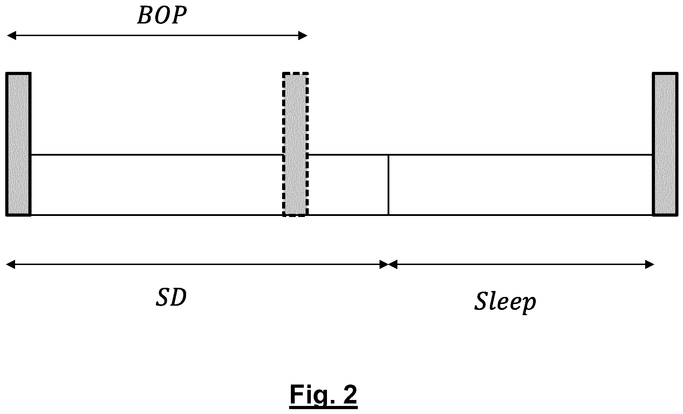

La Fig. 2 représente de manière schématique un exemple d'organisation temporelle des émissions de balises dans le réseau.

Les balises émises par une ancre coordinatrice sont émises avec une période BI (*Beacon Interval*). La transmission entre les ancres obéit à un cadencement imposé par l'ancre coordinatrice primaire, constitué par la répétition d'un intervalle avec la période BI. Chaque intervalle entre deux balises successives comprend une supertrame (*superframe*) de durée SD (*superframe* duration) suivie d'une période de veille (Sleep). On prévoit au début de la supertrame un intervalle de temps suffisamment long, dédié à la transmission des balises par les différentes ancres coordinatrices. Cet intervalle est connu dans l'état de la technique sous l'acronyme de BOP (*Beacon Only Period*). Ainsi, les balises émises par les ancres coordinatrices du réseau sont toutes émises pendant l'intervalle BOP.

Les différents nœuds se synchronisent lors de la mise sous tension du réseau : l'ancre coordinatrice primaire, *A*₀, émet un signal de balise qui sert de référence temporelle au reste du réseau. Les ancres coordinatrices avoisinantes reçoivent le signal de balise via leurs liaisons radio respectives avec *A*₀ et transmettent à leur tour leurs signaux de balise.

Le processus se répète de proche en proche jusqu'à ce que toutes les ancres coordinatrices émettent périodiquement leurs balises. De la même façon, les ancres subordonnées et les étiquettes présentes dans la zone couverte par le réseau reçoivent des signaux de balise des ancres coordinatrices qui sont à leur portée.

Lorsqu'un nœud du réseau (ancre coordinatrice ou subordonnée) reçoit des signaux de balise de plusieurs ancres coordinatrices, celui-ci sélectionne l'ancre coordinatrice sur la base d'un critère de qualité de liaison, par exemple l'ancre coordinatrice dont le signal de balise est de plus forte puissance ou la liaison de rapport signal sur bruit le plus élevé. Cette ancre coordinatrice est appelée ancre de référence du nœud en question.

Chaque nœud qui vient de se synchroniser en informe le serveur central et lui indique l'ancre de référence dont il dépend. Ainsi, le serveur central dispose d'un tableau fournissant, pour chaque nœud, son type (ancre coordinatrice ou subordonnée), son statut de synchronisation (nœud synchronisé ou non) et dans le cas où celui-ci est synchronisé, son ancre de référence.

Si, pour une raison quelconque, un nœud ne détecte plus le signal de balise de son ancre de référence, celui-ci en avertit le serveur central : son statut passe de synchronisé à non synchronisé. La perte du signal de balise peut être due à une panne affectant son ancre de référence ou une perte de la liaison avec cette dernière. En tout état de cause, le nœud ayant perdu la synchronisation passe en mode écoute et effectue périodiquement un scan pour rechercher un nouveau signal de balise. Il en résulte une consommation énergétique importante.

De manière similaire, lorsqu'une étiquette ne reçoit plus de signal de balise, celle-ci diffuse des notifications d'état orphelin. Les ancres (coordinatrices ou subordonnées) qui reçoivent ces notifications relaient l'information de perte de synchronisation au serveur central au moyen de leurs liaisons filaires.

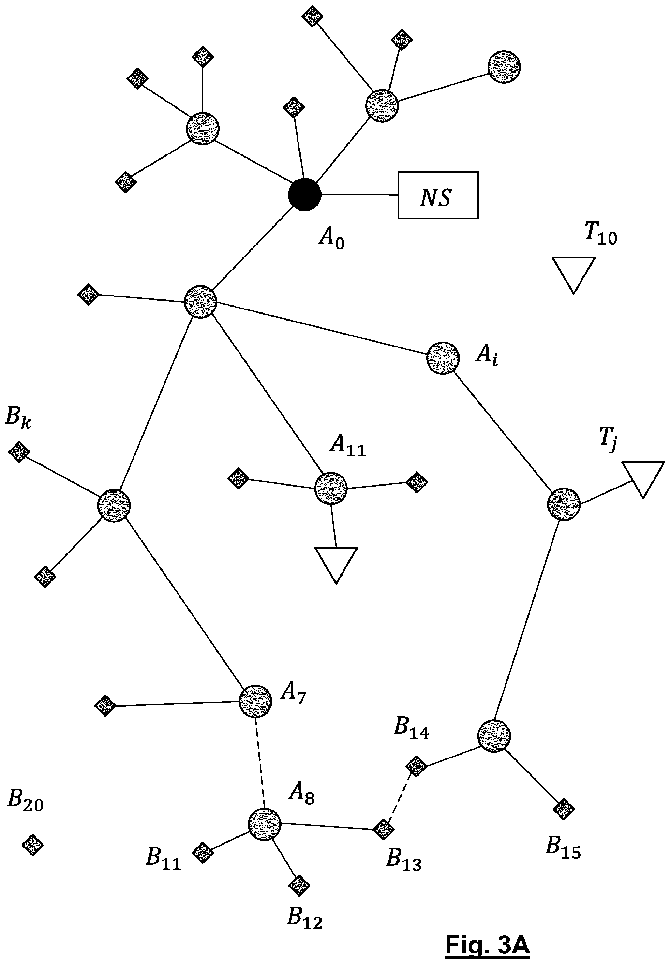

La Fig. 3A illustre un premier exemple de perte de synchronisation dans le réseau de la Fig. 1.

Dans le cas illustré, l'ancre *A*₈ était synchronisée grâce au signal de balise transmis par l'ancre *A*₇, autrement dit l'ancre *A*₇ était l'ancre de référence de l'ancre *A*₈. La panne affectant l'ancre *A*₇ induit une perte de synchronisation de l'ancre *A*₈ (liaison en trait interrompu) qui en informe le serveur central. L'ancre *A*₈ ne pouvant plus émettre de balise, les ancres subordonnées *B*₁₁,*B*₁₂ et *B*₁₃ perdent elles-mêmes leur synchronisation vis-à-vis du reste du réseau et le notifient au serveur central.

Le serveur central connaît l'arborescence des différentes ancres à partir de l'ancre coordinatrice primaire (la racine de l'arbre) jusqu'aux ancres subordonnées (les feuilles de l'arbre). Il peut déterminer à partir de la (ou des) liaison(s) perdue(s) l'ancre de référence (ici *A*₇) à l'origine de la perte de synchronisation et donc le sous-arbre *ST* du réseau affecté par la perte de synchronisation.

Le serveur central connaît la position géographique des ancres (coordinatrices et subordonnées) ainsi que la topologie du réseau. Il recherche dans l'ensemble des nœuds *S\ST,* c'est-à-dire parmi les nœuds de l'ensemble *S* ne faisant pas partie du sous-ensemble *ST,* une ancre capable de servir de nouvelle ancre de référence pour l'un des nœuds du sous-arbre *ST.*

Différents scenarii de reconfiguration sont possibles :
- selon un premier scenario, l'ancre *A*^{∗} = *A*₈, à la racine du sous-arbre *ST,* est proche d'au moins une autre ancre coordinatrice de *S\ST* possédant un statut synchronisé. On entend ici par proche une distance inférieure à une valeur de seuil prédéterminée ou bien une qualité de liaison (exprimée par exemple en rapport signal sur bruit) supérieure à un niveau de seuil prédéterminé. Lorsqu'une telle ancre coordinatrice de *S \ ST* existe, l'ancre *A** reçoit donc un signal de balise de celle-ci. Si plusieurs ancres coordinatrices de *S\ST* sont proches de *A**, la plus proche de *A** (par exemple celle correspondant à la meilleure qualité de liaison) est sélectionnée. Ce premier scenario ne requiert pas de reconfiguration des ancres dans la mesure où une ancre coordinatrice se substitue à une autre ancre coordinatrice comme ancre de référence.
- selon un deuxième scenario, l'ancre *A** est proche d'au moins une ancre subordonnée de *S\ST* possédant un statut synchronisé. Dans le cas où plusieurs telles ancres subordonnées sont proches de *A**, la plus proche de *A** est sélectionnée. Le serveur central transmet (par voie filaire) à l'ancre subordonnée ainsi sélectionnée un ordre de transformation qui lui commande de devenir ancre coordinatrice. Cette nouvelle ancre coordinatrice est notée *A^{s}*. L'ancre *A^{s}* commence à transmettre son propre signal de balise. En outre, elle confirme son changement de type en transmettant (par voie filaire) un message d'acquittement au serveur central. Une fois que l'ancre *A** s'est synchronisée avec l'ancre *A^{s}*, elle transmet de son côté (par voie filaire) au serveur central son changement de statut. Le serveur central met à jour son tableau en modifiant le type de l'ancre *A^{s}* et en modifiant le statut de l'ancre *A** (de non synchronisée à synchronisée).

- selon un troisième scenario, une ancre subordonnée du sous-arbre *ST* est proche d'une ancre coordinatrice de *S*\*ST.* Dans le cas où plusieurs couples d'ancre subordonnée et d'ancre coordinatrice vérifient cette condition, on retient l'ancre subordonnée de *ST* et l'ancre coordinatrice de *S* \ *ST* qui sont les plus proches (distance la plus faible ou meilleure qualité de liaison). Le serveur central demande à l'ancre subordonnée de *ST* ainsi sélectionnée de devenir ancre coordinatrice. Celle-ci renvoie un message d'acquittement au serveur central et émet son propre signal de balise lorsqu'elle est synchronisée.
- selon un quatrième scenario (illustré en Fig. 3A), une ancre subordonnée du sous-arbre *ST,* est proche d'au moins une ancre subordonnée de *S* \ *ST* (possédant un statut synchronisé). Dans le cas où plusieurs couples d'ancres subordonnées appartenant au produit cartésien *ST*×(*S\ST*) vérifient la condition précédente, on pourra choisir le couple d'ancres subordonnées les plus proches au sens défini précédemment. Alternativement, on pourra retenir le couple d'ancres subordonnées (*Bᵢ,Bⱼ*) de *ST*×(*S\ST*), tel que *Bⱼ* est situé le plus haut dans l'arborescence de *S* (c'est-à-dire dont le nombre de liaisons le séparant de la racine *A*₀ est le plus faible). En tout état de cause, le serveur central demande aux ancres *Bᵢ,Bⱼ* (ici *B*₁₃,*B*₁₄) de basculer de type pour devenir ancres coordinatrices. Celles-ci renvoient chacune un message d'acquittement lorsque le basculement est opéré et l'ancre *Bᵢ* = *B*₁₃ informe le serveur lorsqu'elle est synchronisée (établissement de la liaison en trait mixte).

On notera que la reconfiguration selon le troisième ou le quatrième scenario peut ne pas permettre de synchroniser d'emblée tous les nœuds du sous-arbre *ST.* Celui-ci doit être alors itéré jusqu'à ce que tous les nœuds du sous-arbre soient synchronisés. De même, plusieurs sous-arbres peuvent être affectés par une panne d'un nœud. Dans ce cas, les différents sous-arbres sont traités séquentiellement.

Au terme du processus de reconfiguration, la connexité du réseau est rétablie et tous les nœuds sont synchronisés.

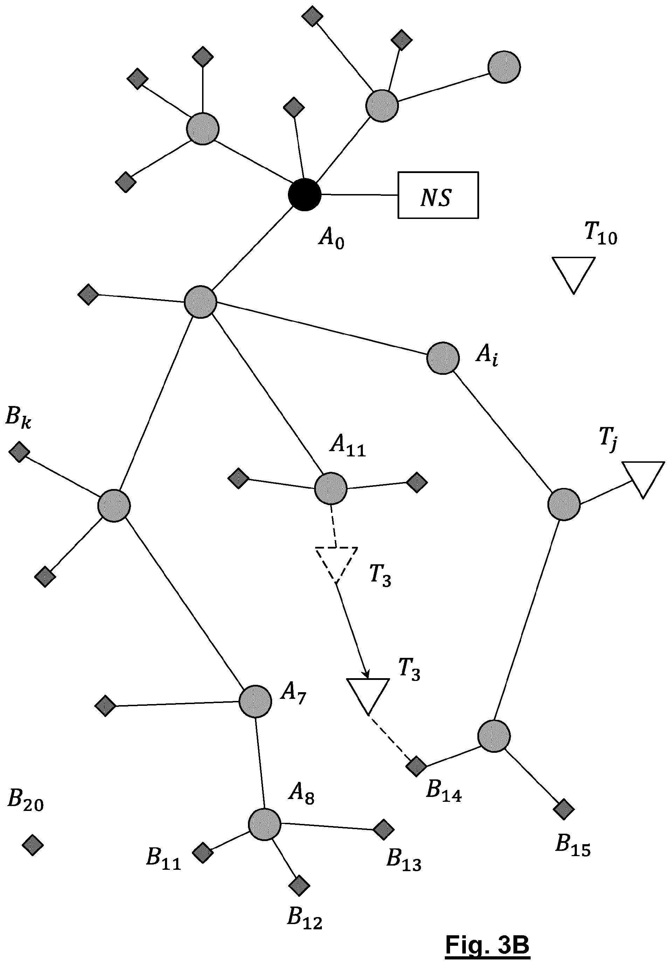

La Fig. 3B illustre un second exemple de perte de synchronisation dans le réseau de la Fig. 1.

Dans le cas illustré, l'étiquette *T*₃ s'est déplacée et a perdu sa synchronisation en sortant de la zone de couverture de son ancre de référence *A*₁₁.

L'étiquette *T*₃ ne recevant plus de signal de balise, elle émet des notifications d'état orphelin. De manière générale, une étiquette ne recevant pas un nombre prédéterminé de balises successives en déduit qu'elle a perdu son association avec son ancre de référence et transmet des notifications d'état orphelin. Ces notifications sont reçues par les ancres (subordonnées ou coordinatrices) situées à proximité de la trajectoire de l'étiquette, au fur et à mesure qu'elle se déplace.

Si l'étiquette entre dans la zone de couverture d'une nouvelle ancre coordinatrice et reçoit par conséquent à nouveau un signal de balise, cette étiquette cesse aussitôt de transmettre des notifications d'état orphelin, se synchronise grâce au signal de balise et émet une demande d'association (message unicast). L'ancre coordinatrice répond à la demande d'association par un message de confirmation et informe le serveur central de cette nouvelle association.

En revanche, si la notification d'état orphelin est reçue par une ancre subordonnée, celle-ci envoie un compte-rendu par voie filaire au serveur central. Ce compte-rendu comprend l'adresse (adresse MAC par exemple) de l'ancre subordonnée qui a reçu la notification, l'identifiant de l'étiquette qui a transmis cette notification, ainsi qu'un indicateur de la qualité de lien entre l'étiquette et l'ancre en question. Optionnellement, le compte-rendu peut comprendre le nombre de notifications d'état orphelin reçues par l'ancre ainsi que les estampilles temporelles des notifications reçues.

Le serveur central peut déterminer, à chaque instant, à partir des comptes rendus des ancres ayant reçu les notifications d'état orphelin, l'ancre subordonnée la mieux qualifiée pour servir d'ancre de référence à l'étiquette. Par exemple, le serveur central pourra sélectionner l'ancre dont la liaison avec l'étiquette présente la qualité la plus élevée et/ou le nombre de notifications d'état orphelin le plus élevé.

Le serveur central *NS* envoie à l'ancre subordonnée ainsi sélectionnée (ici *B*₁₄) un ordre de transformation lui commandant de changer de type, c'est-à-dire de devenir une ancre coordinatrice. L'étiquette reçoit alors le signal de balise de la nouvelle ancre coordinatrice. Sur réception du signal de balise, l'étiquette cesse de transmettre des notifications d'état orphelin et émet une requête d'association à la place. La nouvelle ancre coordinatrice informe (par voie filaire) le serveur central de cette nouvelle association (la nouvelle liaison est indiquée en trait mixte).

Que ce soit pour la synchronisation d'une ancre ou d'une étiquette, une ancre subordonnée peut devoir être reconfigurée en ancre coordinatrice. L'intervalle *BOP* est choisi suffisamment long pour pouvoir ajouter une ancre coordinatrice sans risque de collision avec les balises déjà existantes.

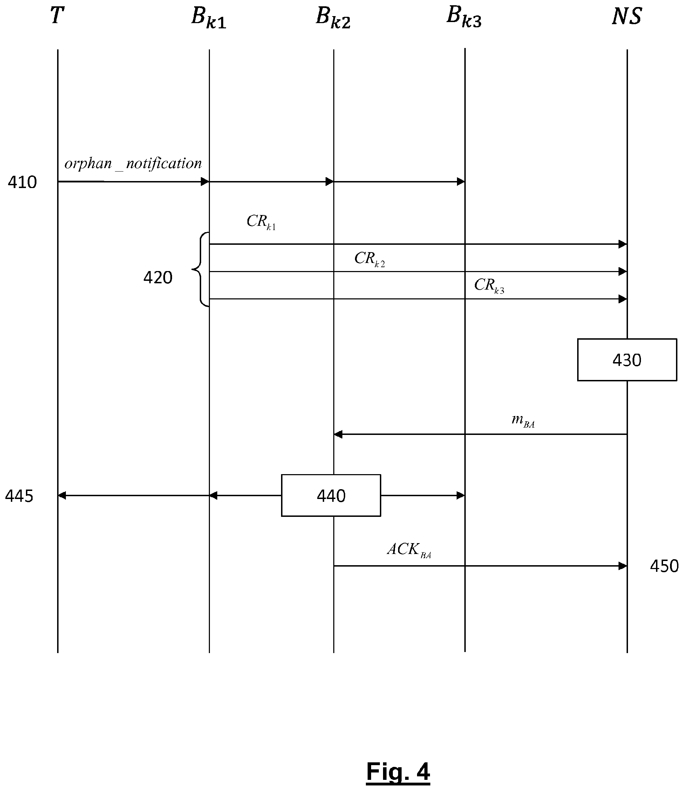

La Fig. 4 représente un exemple d'échange de messages dans le réseau en cas de perte de synchronisation d'une étiquette.

Les messages transmis par voie filaire sont indiqués par des flèches en double trait et ceux transmis par canal radio sont indiqués par des flèches en trait simple.

En 410, si l'étiquette *T* n'a pas reçu un nombre prédéterminé de balises consécutives, celle-ci commence à diffuser des notifications d'état orphelin.

Ces notifications sont reçues par des ancres du réseau, ici des ancres subordonnées notées *B*_{*k*1}*, B*_{*k*2}, *B*_{*k*3}*.* Chacune de ces ancres transmet en 420 un compte rendu au serveur central, soit *CR*_{*k*1},*CR*_{*k*2},*CR*_{*k*3}, chaque compte rendu comprenant l'adresse MAC de l'ancre subordonnée, l'identifiant de l'étiquette *T*, un indicateur de qualité de la liaison entre l'étiquette et l'ancre subordonnée en question et le cas échéant le nombre de notifications reçues de l'étiquette *T* ainsi que les estampilles temporelles de ces notifications.

Le serveur central détermine en 430 l'ancre subordonnée qui doit être convertie en ancre coordinatrice sur la base des indicateurs de qualité de liaison et, le cas échéant, des nombres de notifications reçues. Dans le cas illustré, le serveur central sélectionne l'ancre *B*_{*k*2} et lui transmet un ordre de transformation *m_{BA}* lui commandant de changer de type et de devenir ancre coordinatrice.

Sur réception du message *m_{BA},* l'ancre *Bₖ₂* commence à émettre son signal de balise en 440 avec la périodicité BI, la balise étant émise dans l'intervalle de temps BOP. L'étiquette reçoit le signal de balise de l'ancre *Bₖ₂* en 445 et se synchronise avec le réseau grâce à ce signal.

En outre, l'ancre *B*_{*k*2} confirme au serveur central qu'elle est bien devenue coordinatrice en 450.

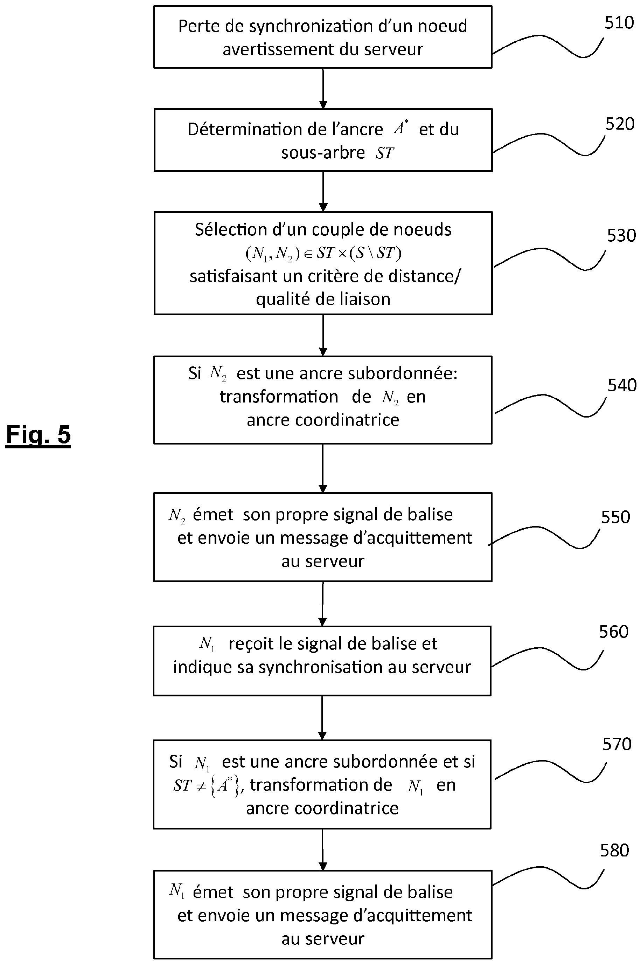

La Fig. 5 représente schématiquement un ordinogramme d'une méthode de reconfiguration d'un réseau WSN selon un premier mode de réalisation de l'invention.

Le réseau S comprend au moins une ancre coordinatrice, étant convenu que cette ancre coordinatrice est l'ancre coordinatrice primaire lorsque le réseau n'en comprend qu'une.

Les nœuds du réseau qui ne sont pas des ancres coordinatrices au sens défini plus haut sont des ancres subordonnées.

Toutes les ancres du réseau sont reliées au serveur central par une liaison filaire.

En cas de perte de synchronisation, tout nœud ne recevant plus de signal de balise de son ancre de référence pendant un premier intervalle de temps prédéterminé en avertit le serveur central en 510. Le premier intervalle de temps peut être fixé égal à un multiple de la période BI.

En 520, le serveur central détermine, à partir de la topologie logique du réseau, l'ancre de référence à l'origine de la perte de synchronisation et le sous-arbre *ST* du réseau S affecté par la perte de synchronisation en question. La racine de ce sous-arbre est un nœud noté *A**.

En 530, le serveur central sélectionne un couple de nœuds constitué par un premier nœud appartenant au sous-arbre *ST* et d'un second nœud appartenant au reste du réseau, *S\ST.* Cette sélection peut être fondée sur un critère de distance et/ou un critère de qualité de liaison. Autrement dit, le serveur central peut choisir le couple de nœuds les plus proches et/ou présentant la meilleure qualité de liaison (par exemple grâce à un indicateur de rapport signal sur bruit). Si aucun des couples de nœuds n'est distant de moins d'une distance prédéterminée ou présente une liaison de qualité supérieure à un niveau prédéterminé, le serveur central termine le processus de reconfiguration du réseau.

En 540, si le second nœud est une ancre subordonnée, le serveur central lui transmet un ordre de transformation lui indiquant de devenir ancre coordinatrice. Celle-ci émet alors aussitôt son propre signal de balise et renvoie un message d'acquittement au serveur central en 550. Lorsque le second nœud est une ancre coordinatrice, aucune reconfiguration de cette ancre n'est nécessaire.

En 560, lorsque le premier nœud reçoit le signal de balise du second nœud, le premier nœud envoie au serveur central un message lui indiquant qu'il est bien synchronisé.

En 570, si le premier nœud est une ancre subordonnée et que le sous-arbre *ST* ne se réduit pas au singleton {*A**}, le serveur central transmet au premier nœud un ordre de transformation en ancre coordinatrice de manière à ce qu'elle puisse synchroniser au moins une partie des nœuds du sous-arbre *ST.*

Lorsque le premier nœud reçoit un ordre de transformation du serveur central, le premier nœud commence à émettre son propre signal de balise et envoie un message d'acquittement au serveur central en 580.

Le processus décrit dans les étapes 530 à 580 peut être éventuellement itéré jusqu'à ce que tous les nœuds du sous-arbre soient synchronisés.

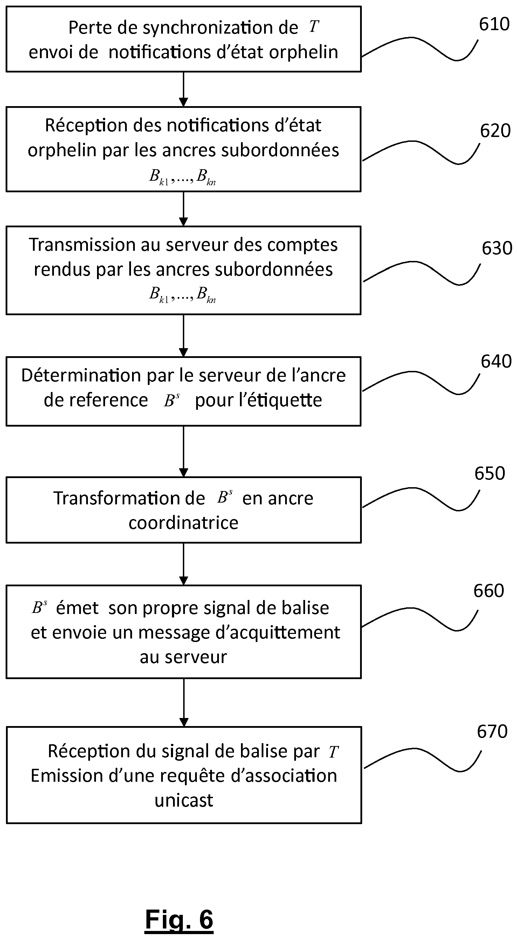

La Fig. 6 représente schématiquement un ordinogramme de la méthode de reconfiguration d'un réseau WSN selon un second mode de réalisation de l'invention.

Ce mode de réalisation concerne une reconfiguration du réseau *S* lorsqu'une étiquette *T* a perdu sa synchronisation avec le réseau, c'est-à-dire n'a pas reçu de signal de balise pendant un premier intervalle de temps prédéterminé. Ce premier intervalle de temps peut être fixé égal à un multiple de la période BI.

A l'étape 610, l'étiquette *T* diffuse des notifications d'état orphelin.

Si l'étiquette *T* reçoit à nouveau un signal de balise, elle se synchronise à nouveau avec le réseau, cesse de diffuser des notifications d'état orphelin et émet à la place une demande d'association avec l'ancre coordinatrice ayant émis le signal de balise. Ce scenario ne requiert pas de reconfiguration des ancres du réseau (simple processus de hand-over).

A l'étape 620, une notification d'état orphelin est reçue par une ou des ancres subordonnées du réseau, *B*_{*k*1},..., *Bₖₙ*.

A l'étape 630, chacune des ancres *B*_{*k*1},...,*Bₖₙ* transmet un compte rendu au serveur central comprenant l'identifiant de l'étiquette, l'adresse MAC de l'ancre subordonnée ayant reçu la notification et l'indicateur de la qualité de la liaison entre l'étiquette et l'ancre subordonnée en question. Comme précédemment indiqué, le compte-rendu peut en outre comprendre le nombre de notifications reçues (par exemple dans un second intervalle de temps prédéterminé, multiple de BI) et les estampilles temporelles de ces notifications.

A l'étape 640, le serveur central détermine à partir des comptes rendus reçus de *B*_{*k*1},...,*Bₖₙ*, l'ancre subordonnée *B^{s}* qui servira de référence à l'étiquette *T*. Le choix peut être effectué en fonction de la qualité de la liaison et, le cas échéant, du nombre de notifications reçues pendant le second intervalle de temps.

A l'étape 650, le serveur central transmet à l'ancre sélectionnée *B^{s}* un ordre de transformation lui commandant de devenir ancre coordinatrice.

A l'étape 660, l'ancre *B^{s}* émet son propre signal de balise et transmet un message d'acquittement au serveur central.

A l'étape 670, l'étiquette *T* reçoit le signal de balise de *B^{s}*, transmet à *B^{s}* une requête d'association, sous la forme d'un message unicast ayant pour argument l'adresse MAC de *B^{s}*, et cesse de diffuser des notifications d'état orphelin.

Les autres ancres subordonnées ne reçevant plus de notifications d'état orphelin cessent par conséquent de transmettre des comptes rendus au serveur central.

Ainsi, l'étiquette peut se déplacer au sein du réseau, des ancres subordonnées à sa portée passant dynamiquement à l'état d'ancres coordinatrices le long de sa trajectoire pour assurer la synchronisation de l'étiquette.

## Revendications

1. Méthode de reconfiguration d'un réseau de capteurs sans fil organisé selon une architecture arborescente, ledit réseau comprenant des nœuds d'un premier type, dits ancres coordinatrices, capables de recevoir et d'émettre un signal de balise et des nœuds d'un second type, dits ancres subordonnées, capables de recevoir un signal de balise pour se synchroniser avec le réseau, les nœuds étant par ailleurs reliés par un canal auxiliaire à un serveur central, **caractérisée en ce que**, lorsqu'un nœud perd sa synchronisation avec le réseau, il en avertit le serveur central (510) et celui-ci en déduit (520), à partir de la topologie du réseau, l'ancre coordinatrice à l'origine de la perte de synchronisation et le sous-arbre (*ST*) du réseau atteint par la perte de synchronisation, le serveur central selectionne (530) un couple de nœuds constitué par un premier nœud appartenant audit sous-arbre et un second nœud appartenant au reste du réseau (*S \ ST*), et si le second nœud est une ancre subordonnée, lui transmet un ordre de transformation pour le transformer en ancre coordinatrice, le premier nœud se synchronisant avec le réseau au moyen du signal de balise émis par le second nœud ainsi transformé.

2. Méthode de reconfiguration d'un réseau de capteurs sans fil selon la revendication 1, **caractérisée en ce que**, lorsque le second nœud reçoit l'ordre de transformation du serveur central, il lui envoie un message d'acquittement et transmet son propre signal de balise.

3. Méthode de reconfiguration d'un réseau de capteurs sans fil selon la revendication 1 ou 2, **caractérisée en ce que**, lorsque le premier nœud reçoit le signal de balise du second nœud, celui-ci envoie un message au serveur central indiquant qu'il est synchronisé.

4. Méthode de reconfiguration d'un réseau de capteurs sans fil selon l'une des revendications précédentes, **caractérisée en ce que**, si le premier nœud est une ancre subordonnée et que le sous-arbre ne se réduit pas à ce premier nœud, le serveur central lui transmet un ordre de transformation pour le transformer en ancre coordinatrice, au moins un troisième nœud appartenant audit sous-arbre se synchronisant alors au moyen du signal de balise émis par le premier nœud ainsi transformé.

5. Méthode de reconfiguration d'un réseau de capteurs sans fil selon la revendication 4, **caractérisée en ce que**, lorsque le premier nœud reçoit un ordre de transformation du serveur central, celui-ci commence à émettre son propre signal de balise et lui envoie un message d'acquittement.

6. Méthode de reconfiguration d'un réseau de capteurs sans fil selon l'une des revendications précédentes, **caractérisée en ce que** le serveur central sélectionne le couple de nœuds sur la base d'un critère de distance minimale séparant ces nœuds et/ou d'un critère de qualité de liaison entre ces nœuds.

7. Méthode de reconfiguration d'un réseau de capteurs sans fil organisé selon une architecture arborescente, ledit réseau comprenant des nœuds d'un premier type, dits ancres coordinatrices, capables de recevoir et d'émettre un signal de balise et des nœuds d'un second type, dits ancres subordonnées, capables de recevoir un signal de balise pour se synchroniser avec le réseau, les nœuds étant par ailleurs reliés par un canal auxiliaire à un serveur central, au moins une étiquette électronique étant mobile au sein du réseau, ladite étiquette étant capable de se synchroniser avec le réseau à partir d'un signal de balise émis par une ancre coordinatrice, **caractérisée en ce que** lorsque ladite étiquette n'a pas reçu de signal de balise pendant un premier intervalle de temps prédéterminé, celle-ci diffuse (610) des notifications d'état orphelin tant qu'elle ne reçoit pas à nouveau un signal de balise, et que les ancres subordonnées du réseau recevant les notifications d'état orphelin (620) transmettent chacune (630) au serveur central un compte rendu comprenant un identifiant de l'étiquette, l'adresse MAC de l'ancre subordonnée ayant reçu la notification d'état orphelin et un indicateur de la qualité de la liaison entre ladite étiquette et l'ancre subordonnée, le serveur central sélectionnant (640) une ancre subordonnée parmi celles ayant reçu les notifications d'état orphelin sur la base au moins de ladite qualité de liaison, le serveur central transmettant (650) un ordre de transformation à l'ancre subordonnée ainsi sélectionnée pour la transformer en ancre coordinatrice, ladite étiquette se synchronisant avec le réseau au moyen du signal de balise émis par l'ancre coordinatrice ainsi obtenue.

8. Méthode de reconfiguration d'un réseau de capteurs sans fil selon la revendication 7, **caractérisée en ce que** le compte rendu envoyé par une ancre subordonnée comprend en outre le nombre de notifications d'état orphelin reçues de l'étiquette pendant un second intervalle de temps prédéterminé.

9. Méthode de reconfiguration d'un réseau de capteurs sans fil selon la revendication 8, **caractérisée en ce que** le serveur central effectue la sélection de l'ancre subordonnée sur la base d'un critère de qualité de liaison entre l'ancre subordonnée et l'étiquette, et, le cas échéant, d'un nombre de notifications d'état orphelin reçues de l'étiquette par l'ancre subordonnée pendant le second intervalle de temps prédéterminé.

10. Méthode de reconfiguration d'un réseau de capteurs sans fil selon l'une des revendications 7 à 9, **caractérisée en ce que** lorsque l'ancre subordonnée sélectionnée reçoit un ordre de transformation du serveur central, celle-ci se met à émettre son propre signal de balise et envoie (660) un message d'acquittement au serveur central par le canal auxiliaire.

11. Méthode de reconfiguration d'un réseau de capteurs sans fil selon la revendication 10, **caractérisée en ce que** lorsque ladite étiquette reçoit le signal de balise de l'ancre coordinatrice ainsi obtenue, elle transmet à cette dernière une requête d'association au moyen d'un message unicast.

12. Méthode de reconfiguration d'un réseau de capteurs sans fil selon l'une des revendications précédentes, **caractérisée en ce que** le réseau de capteurs est conforme à la norme IEEE 802.15.4.

13. Méthode de reconfiguration d'un réseau de capteurs sans fil selon l'une des revendications précédentes, **caractérisée en ce que** le canal auxiliaire est une liaison filaire.

14. Méthode de reconfiguration d'un réseau de capteurs sans fil selon l'une des revendications 1 à 12, **caractérisée en ce que** le canal auxiliaire est une liaison Wi-Fi.

## Patentansprüche

1. Verfahren zum Rekonfigurieren eines drahtlosen Sensornetzwerks, das gemäß einer Baumarchitektur organisiert ist, wobei das Netzwerk Knoten eines ersten Typs, koordinierende Anker genannt, die in der Lage sind, ein Bakensignal zu empfangen und auszusenden, und Knoten eines zweiten Typs, untergeordnete Anker genannt, umfasst, die in der Lage sind, ein Bakensignal zum Synchronisieren mit dem Netzwerk zu empfangen, wobei die Knoten ferner über einen Hilfskanal mit einem zentralen Server verbunden sind,
**dadurch gekennzeichnet, dass**
dann, wenn ein Knoten seine Synchronisation mit dem Netzwerk verliert, er den zentralen Server darüber benachrichtigt (510) und dieser ausgehend von der Topologie des Netzwerks als Ursache des Verlusts der Synchronisation den koordinierenden Anker und den von dem Verlust der Synchronisation betroffenen Teilbaum (*ST*) des Netzwerks ableitet, wobei der zentrale Server ein Knotenpaar auswählt (530), das aus einem ersten Knoten, der zu dem Teilbaum gehört, und aus einem zweiten Knoten, der zum Rest des Netzwerks (*S\ST*) gehört, besteht, und
dann, wenn der zweite Knoten ein untergeordneter Anker ist, diesem einen Transformationsbefehl überträgt, um ihn in einen koordinierenden Anker umzuwandeln, wobei der erste Knoten mittels des Bakensignals, das von dem so umgewandelten zweiten Knoten ausgesendet wird, sich mit dem Netzwerk synchronisiert.

2. Verfahren zum Rekonfigurieren eines drahtlosen Sensornetzwerks nach Anspruch 1,
**dadurch gekennzeichnet, dass**
dann, wenn der zweite Knoten den Transformationsbefehl vom zentralen Server erhält, er diesem eine Bestätigungsnachricht sendet und sein eigenes Bakensignal überträgt.

3. Verfahren zum Rekonfigurieren eines drahtlosen Sensornetzwerks nach Anspruch 1 oder 2,
**dadurch gekennzeichnet, dass**
dann, wenn der erste Knoten das Bakensignal vom zweiten Knoten empfängt, dieser eine Nachricht an den zentralen Server sendet, die anzeigt, dass er synchronisiert ist.

4. Verfahren zum Rekonfigurieren eines drahtlosen Sensornetzwerks nach einem der vorangehenden Ansprüche,
**dadurch gekennzeichnet, dass**
dann, wenn der erste Knoten ein untergeordneter Anker ist und der Teilbaum sich nicht auf diesen ersten Knoten beschränkt, der zentrale Server diesem einen Transformationsbefehl überträgt, um ihn in einen koordinierenden Anker umzuwandeln, wobei mindestens ein dritter Knoten, der zu diesem Teilbaum gehört, sich dann mittels des Bakensignals, das von dem so umgewandelten ersten Knoten ausgesendet wird, synchronisiert.

5. Verfahren zum Rekonfigurieren eines drahtlosen Sensornetzwerks nach Anspruch 4,
**dadurch gekennzeichnet, dass**
dann, wenn der erste Knoten einen Transformationsbefehl von dem zentralen Server empfängt, dieser beginnt, sein eigenes Bakensignal auszusenden, und ihm eine Bestätigungsnachricht sendet.

6. Verfahren zum Rekonfigurieren eines drahtlosen Sensornetzwerks nach einem der vorangehenden Ansprüche,
**dadurch gekennzeichnet, dass**
der zentrale Server basierend auf einem Kriterium des Mindestabstands zwischen diesen Knoten und/oder auf einem Kriterium der Qualität der Verbindung zwischen diesen Knoten das Knotenpaar auswählt.

7. Verfahren zum Rekonfigurieren eines drahtlosen Sensornetzwerks, das gemäß einer Baumarchitektur organisiert ist, wobei das Netzwerk Knoten eines ersten Typs, koordinierende Anker genannt, die in der Lage sind, ein Bakensignal zu empfangen und auszusenden, und Knoten eines zweiten Typs, untergeordnete Anker genannt, umfasst, die in der Lage sind, ein Bakensignal zum Synchronisieren mit dem Netzwerk zu empfangen, wobei die Knoten ferner über einen Hilfskanal mit einem zentralen Server verbunden sind, wobei zumindest ein elektronisches Tag innerhalb des Netzwerks verschiebbar ist, wobei das Tag in der Lage ist, sich mit dem Netzwerk ausgehend von einem von einem koordinierenden Anker ausgesendeten Bakensignal zu synchronisieren,
**dadurch gekennzeichnet, dass**
dann, wenn das Tag während eines ersten vorgegebenen Zeitintervalls kein Bakensignal empfangen hat, es Orphan-Status-Benachrichtigungen sendet (610), solange es nicht erneut ein Bakensignal empfängt, und
die untergeordneten Anker des Netzwerks, die die Orphan-Status-Benachrichtigungen empfangen (620), jeweils einen Bericht an den zentralen Server übertragen (630), der eine Kennung des Tags, die MAC-Adresse des untergeordneten Ankers, der die Orphan-Status-Benachrichtigung empfangen hat, und einen Indikator für die Qualität der Verbindung zwischen dem Tag und dem untergeordneten Anker enthält, wobei der zentrale Server einen untergeordneten Anker aus denjenigen, die die Orphan-Status-Benachrichtigungen empfangen haben, auf der Grundlage zumindest der Verbindungsqualität auswählt (640), wobei der zentrale Server eine Transformationsbefehl an den so ausgewählten untergeordneten Anker überträgt (650), um ihn in einen koordinierenden Anker umzuwandeln, wobei das Tag sich mittels des vom so erhaltenen koordinierenden Anker übertragenen Bakensignals mit dem Netzwerk synchronisiert.

8. Verfahren zum Rekonfigurieren eines drahtlosen Sensornetzwerks nach Anspruch 7,
**dadurch gekennzeichnet, dass**
der von einem untergeordneten Anker gesendete Bericht ferner die Anzahl von Orphan-Status-Benachrichtigungen enthält, die von dem Tag während eines zweiten vorbestimmten Zeitintervalls empfangen werden.

9. Verfahren zum Rekonfigurieren eines drahtlosen Sensornetzwerks nach Anspruch 8,
**dadurch gekennzeichnet, dass**
der zentrale Server die Auswahl des untergeordneten Ankers basierend auf einem Kriterium der Qualität der Verbindung zwischen dem untergeordneten Anker und dem Tag und gegebenenfalls einer Anzahl von Orphan-Status-Benachrichtigungen durchführt, die von dem Tag durch den untergeordneten Anker während des zweiten vorbestimmten Zeitintervalls empfangen werden.

10. Verfahren zum Rekonfigurieren eines drahtlosen Sensornetzwerks nach einem der Ansprüche 7 bis 9,
**dadurch gekennzeichnet, dass**
dann, wenn der ausgewählte untergeordnete Anker einen Transformationsbefehl von dem zentralen Server empfängt, der Anker damit beginnt, sein eigenes Bakensignal auszusenden, und über den Hilfskanal eine Bestätigungsnachricht an den zentralen Server sendet (660).

11. Verfahren zum Rekonfigurieren eines drahtlosen Sensornetzwerks nach Anspruch 10,
**dadurch gekennzeichnet, dass**
dann, wenn das Tag das Bakensignal von dem so erhaltenen koordinierenden Anker empfängt, es an diesen eine Assoziationsanfrage mittels einer Unicast-Nachricht sendet.

12. Verfahren zum Rekonfigurieren eines drahtlosen Sensornetzwerks nach einem der vorangehenden Ansprüche,
**dadurch gekennzeichnet, dass**
das Sensornetzwerk der Norm IEEE 802.15.4 entspricht.

13. Verfahren zum Rekonfigurieren eines drahtlosen Sensornetzwerks nach einem der vorangehenden Ansprüche,
**dadurch gekennzeichnet, dass**
der Hilfskanal eine drahtgebundene Verbindung ist.

14. Verfahren zum Rekonfigurieren eines drahtlosen Sensornetzwerks nach einem der Ansprüche 1 bis 12,
**dadurch gekennzeichnet, dass**
der Hilfskanal eine Wi-Fi-Verbindung ist.

## Claims

1. A method for reconfiguring a wireless sensor network organised in a tree architecture, said network comprising nodes of a first type, called coordinating anchors, capable of receiving and emitting a beacon signal and nodes of a second type, called subordinate anchors, capable of receiving a beacon signal for synchronising with the network, the nodes being additionally connected by an auxiliary channel to a central server, **characterised in that**, when a node loses its synchronisation with the network, it informs the central server (510) about it and the latter infers (520), from the network topology, the coordinating anchor originating the synchronisation loss and the network sub-tree (*ST*) affected by the synchronisation loss, the central server selects (530) a couple of nodes consisting of a first node belonging to said sub-tree and a second node belonging to the rest of the network (*S\ST*), and if the second node is a subordinate anchor, transmits a transformation command to it in order to transform it into a coordinating anchor, the first node synchronising with the network by means of the beacon signal emitted by the second node thus transformed.

2. The method for reconfiguring a wireless sensor network according to claim 1, **characterised in that**, when the second node receives the transformation command from the central server, it sends an acknowledgment message to it and transmits its own beacon signal.

3. The method for reconfiguring a wireless sensor network according to claim 1 or 2, **characterised in that**, when the first node receives the beacon signal from the second node, the latter sends a message to the central server indicating that it is synchronised.

4. The method for reconfiguring a wireless sensor network according to one of the preceding claims, **characterised in that**, if the first node is a subordinate anchor and the sub-tree is not only this first node, the central server transmits a transformation command to it in order to transform it into a coordinating anchor, at least a third node belonging to said sub-tree then synchronising by means of the beacon signal emitted by the first node thus transformed.

5. The method for reconfiguring a wireless sensor network according to claim 4, **characterised in that**, when the first node receives a transformation command from the central server, the latter begins to emit its own beacon signal and sends an acknowledgment message to it.

6. The method for reconfiguring a wireless sensor network according to one of the preceding claims, **characterised in that** the central server selects the couple of nodes based on a criterion of minimum distance separating these nodes and/or a criterion of link quality between these nodes.

7. A method for reconfiguring a wireless sensor network organised in a tree architecture, said network comprising nodes of a first type, called coordinating anchors, capable of receiving and emitting a beacon signal and nodes of a second type, called subordinate anchors, capable of receiving a beacon signal for synchronising with the network, the nodes being additionally connected by an auxiliary channel to a central server, at least one electronic tag being mobile within the network, said tag being capable of synchronising with the network from a beacon signal emitted by a coordinating anchor, **characterised in that** when said tag has not received a beacon signal for a first predetermined time interval, the latter broadcasts (610) orphan notifications as long as it does not receive again a beacon signal, and as long as the subordinate anchors of the network receiving the orphan notifications (620) each transmit (630) to the central server a report comprising an identifier for the tag, the MAC address of the subordinate anchor having received the orphan notification and an indicator of the link quality between said tag and the subordinate anchor, the central server selecting (640) a subordinate anchor from those having received the orphan notifications based on at least said link quality, the central server transmitting (650) a transformation command to the subordinate anchor thus selected to transform it into a coordinating anchor, said tag synchronising with the network by means of the beacon signal emitted by the coordinating anchor thus obtained.

8. The method for reconfiguring a wireless sensor network according to claim 7, **characterised in that** the report sent by a subordinate anchor further comprises the number of orphan notifications received from the tag for a second predetermined time interval.

9. The method for reconfiguring a wireless sensor network according to claim 8, **characterised in that** the central server performs selecting the subordinate anchor based on a criterion of connection quality between the subordinate anchor and the tag, and, optionally, a number of orphan notifications received from the tag by the subordinate anchor for the second predetermined time interval.

10. The method for reconfiguring a wireless sensor network according to one of claims 7 to 9, **characterised in that** when the selected subordinate anchor receives a transformation command from the central server, the latter starts to emit its own beacon signal and sends (660) an acknowledgment message to the central server by the auxiliary channel.

11. The method for reconfiguring a wireless sensor network according to claim 10, **characterised in that** when said tag receives the beacon signal from the coordinating anchor thus obtained, it transmits to the latter an association request by means of a unicast message.

12. The method for reconfiguring a wireless sensor network according to one of the preceding claims, **characterised in that** the sensor network is compliant with the IEEE 802.15.4 standard.

13. The method for reconfiguring a wireless sensor network according to one of the preceding claims, **characterised in that** the auxiliary channel is a wire connection.

14. The method for reconfiguring a wireless sensor network according to one of claims 1 to 12, **characterised in that** the auxiliary channel is a Wi-Fi connection.
